# EUROPEAN PATENT APPLICATION

(11) **EP 1 033 516 A1**
(43) Date of publication of application: **06.09.2000**
(21) Application number: 99830109.7
(22) Date of filing: 01.03.1999
(51) Int. Cl.: F16K 27/06

(54) **Valve for regulating fluids**

(71) Applicant: Piana, Alessandro, 13010 Roccapietra di Varallo Sesia (Vercelli) (IT)
(72) Inventor: Piana, Alessandro, 13010 Roccapietra di Varallo Sesia (Vercelli) (IT)
(74) Representative: Gislon, Gabriele

(57) **Abstract**

A valve (150) for the interception and/or the regulation of a fluid, and/or for the isolation of a fluid circuit, comprises a main body, at least one pipe union fitting (151) integral with the main body of the valve, as well as at least one threaded nut (153') associated to the pipe union fitting and retained on it in an inseparable way by means of cold deformation of at least a portion of the same nut.

## Description

The present invention relates in general to a valve for intercepting and/or regulating and/or isolating a fluid (described below for simplicity as valve) intended to be connected to a pipe or an apparatus in which a liquid or gaseous fluid flows. In particular, the present invention relates to a valve intended to be connected upstream or downstream of 'apparatuses' that are subject to frequent dismantling for the purpose of overhaul or replacement.

The generic term "apparatuses" identifies below all those devices that can be inserted into a circuit, such as, for instance tools for measuring the volume, pressure, speed, temperature, energy etc. of the liquid or gaseous fluids; devices for filtering, treating and regulating the pressure and the flow rate of fluids in general; devices designed to guarantee the safety of the plant, such as anti-blast, non-return, anti-pollution, etc.; and devices for the acceleration of the fluids, such as pumps and compressors for instance.

These apparatuses are generally connected into the circuit mounting a valve at least upstream of the apparatus. More frequently two valves are installed, one immediately upstream and the other immediately downstream of the apparatus to allow the line of the circuit in which the apparatus is inserted to be totally isolated.

According to the known art, these apparatuses are installed by means of multi-element pipe union joints and separated from the apparatus. These known types of joints comprise a manifold, externally threaded at one end, that is screwed into a suitably threaded pipe fitting to the valve, and a threaded ring nut, destined to be screwed onto a threaded connection to the apparatus or the pipe, which is tightened against a flange present on the threaded ring nut.

It is therefore evident why the operation of installing an apparatus requires quite a lot time and the availability of the various tools necessary for the assembly, as well as the various types of joints, above all related to the various dimensions of the same joints. In other words, to install an apparatus in a pipe, the operator must first screw the entry port of the valve set on a pipe upstream of the apparatus; then - with a suitable tool - he must screw the threaded manifold of the joint into the exit port of the valve, and then he must screw the threaded ring nut associated to the joint onto the manifold of the apparatus.

It is further evident that the higher the number of threaded connections necessary to connect the apparatus to the rest of the circuit by means of the known type of junction, the higher the loss of fluid from the circuit. This loss could also be extremely dangerous, above all in the case where the fluids are inflammable, explosive, or somehow harmful to the environment.

Therefore, there is a particularly felt need to simplify and make safe the connection of the valves and of the apparatuses to the circuits in which fluids are transferred.

The object of the present invention is that of providing a particular type of pipe fitting that resolves the drawbacks of the known technique.

This object is achieved by the present invention, which relates to a valve of the type comprising a main body, at least one externally operable control member, at least one entry port and at least one exit port, characterised in that at least one of the ports comprises a pipe union fitting integral with the main body of the valve and is fitted on its free end with a radially-extending perimeter flange, and that a threaded nut is associated to the pipe union fitting and retained inseparably by means of the cold deformation of at least a portion of the threaded nut.

By producing the connection joints in an integral way with any valve, the need to use separate junctions to connect any apparatus to the circuit is eliminated. This also notably reduces the risk of possible leaks from the pipe fittings, above all in the case in which the apparatus connected upstream of the valve must be taken off frequently for checks or tests.

The cold deformation of the nut to associate it in an inseparable way with the pipe fitting simplifies notably the construction of the same valve. The nut is in fact provided with a radial relief portion that allows permanent deformation without any alteration in the physical and mechanical characteristics .

According to a possible embodiment of the invention, both the entry and exit ports are equipped with pipe union fittings integral with the body of the valve, as well as respective threaded nuts associated to each of the pipe unions and retained on the same by cold deformation of the respective portion of the nuts.

It should also be noticed that the production of pipe union fittings integral with the valve reduces the energy-losses, vibrations and acoustic pollution due to the numerous discontinuities along the run of the fluid inside the valve caused by the coupling between the joints and the valves of known type.

It will be appreciated that there are many advantages offered by a valve according to the present invention. For instance, in the installation site the additional time of assembly of the pipe union on the valve is saved, as is the need to use tools to carry out this operation. The possibilities of risky losses is also reduced, above all in the case in which the fluid circulating is gas, facilitating the possibility of achieving compliance with the safety regulations currently widely in force in industrialised countries.

Further characteristics and advantages of the present invention will be more evident from the following description which is by way of example and not limitative, with particular reference to the enclosed schematic drawings in which:
- Figure 1 shows a portion of a plant for the circulation of a fluid, comprising an apparatus interposed between two valves, according to the known technique;
- Figure 2 shows a portion of a plant for the circulation of a fluid, comprising an apparatus interposed between two valves, according to the present invention; and
- Figures from 3 to 5 show some phases of the method for producing a valve according to the present invention.

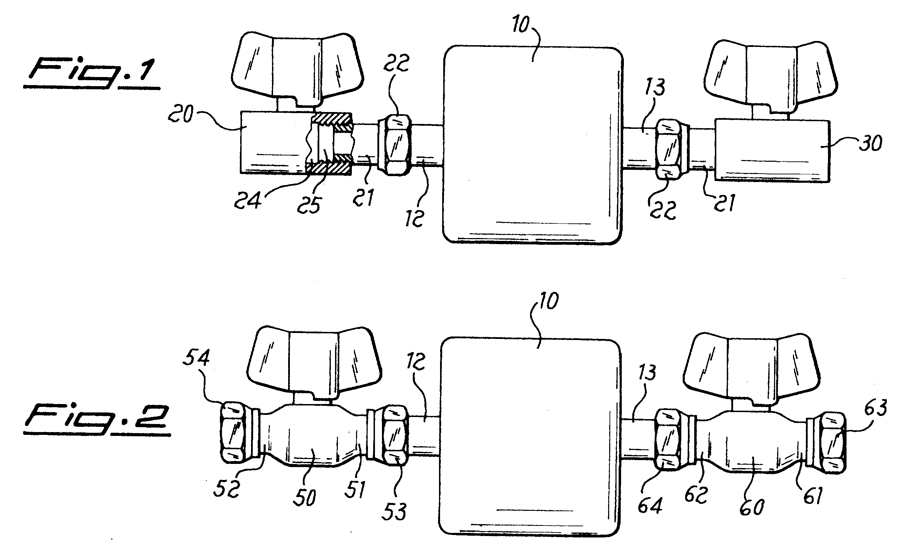

The portion of plant shown in Figure 1 is an example of the connection of an apparatus 10 between a pair of valves 20 and 30.

The valve 20 is connected to the apparatus 10 by means of a pipe union joint formed from two separate elements, i.e. a manifold 21 threaded at its end of connection to the valve 20 and a ring nut 22, threaded internally to be screwed onto the manifold 12 of the apparatus 10, which tightens against an extremity flange (not shown) on the unthreaded end of the manifold 21. The other manifold 13 of the apparatus is in turn connected to the valve 30 through a similar system, i.e. via a manifold 21 and a threaded ring nut 22.

As can be seen in the partial section of the valve 20 in Figure 1, there is a discontinuity 25 between the threaded end of the manifold 21 and the seat 24 for the interception member of the valve, that could give rise to turbulence in the flow of fluid, with consequent loss of load at the point of the connection between the valve 20 (or 30) and the manifold 21. Beyond causing a loss of energy in the flow of fluid, that could give rise to undesirable phenomena, such as vibration and noise pollution, as well as to wear on the surfaces reciprocally in contact.

Figure 2 shows instead the same apparatus 10 between a pair of valves 50 and 60 according to the present invention. The valve 50 is fitted on both the entry and exit ports with pipe union fittings 51 and 52 produced integrally with the main body of the valve. There is a nut 53 associated to the pipe union fitting 51 that is screwed directly onto the manifold 12 of the apparatus. There is a nut 54 associated to the pipe union fitting 52 that will be screwed to a pipe (not shown) through which flows the fluid in the branch of the circuit on which the apparatus is installed.

The nuts 53 and 54 are associated in an inseparable way with their respective pipe union fittings 51 and 52 by means of cold deformation of at least a portion of the same nuts.

The valve 60 connected to the manifold 13 of the apparatus is also produced according to the invention similarly to valve 50. In short, the valve 60 is equipped with pipe union fittings 61 and 62 produced integrally with the main body of the valve 60, and to each of the pipe fittings 61 and 62 there is associated in an inseparable way their respective nuts 63 and 64 by means of cold deformation of a portion of each nut.

Compared to the known technique shown in Figure 1, it is evident that the valve according to the present invention reduces the number of elements needed to connect an apparatus 10 into a fluid circuit. Furthermore, any discontinuity in the flow of the fluid at points corresponding to the connection between the manifolds 12 and 13 of the apparatus 10 and the valves 50 and 60 respectively, is avoided by producing the pipe union fittings integral with the main body of each valve.

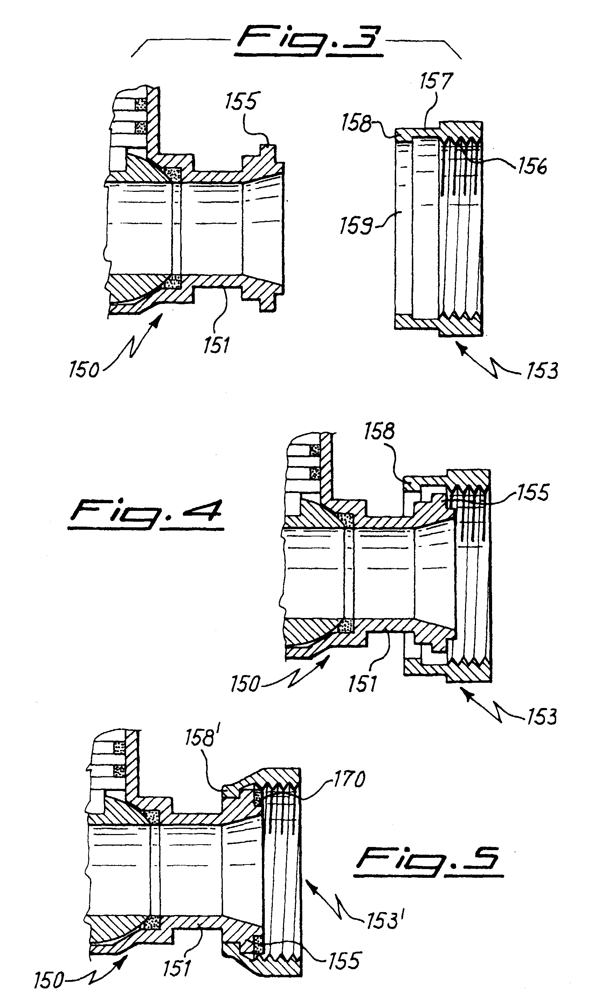

Figures 3 to 5 show partial cross section views of a valve 150 according to the present invention during the application of a nut 153 to the pipe union fitting 151 produced integrally with the body of the valve 150.

The pipe union fitting 151 is provided on its free end with a perimeter flange 155 that projects radially. The nut 153 shown in Figure 3 in the undeformed condition, comprises an internally threaded portion 156, a radial relief portion 157 with such dimensions as to allow permanent deformation of the material without any alteration in the physical and mechanical characteristics, and a strong portion 158 that surrounds a through hole 159 of internal diameter superior to the external diameter of the flange 155.

The nut 153 thus produced is inserted along the pipe union fitting 151 (Figure 4) carrying the strong portion 158 beyond the flange 155 on the same pipe union fitting 151.

The strong portion 158 is then cold pressed to form a retaining counter-flange 158' (Figure 5) in a such way that the resultant nut 153' remains in an inseparable way locked to the pipe union fitting 151. Following assembly of the valve according to the present invention, the retaining counter-flange 158' will bear against the flange 155 of the pipe union fitting 151. A gasket 170, shown only for simplicity in Figure 5, is housed in a suitable seat on the front wall of the flange 155.

The nut 153' thus obtained is freely mobile along a direction parallel to the axis of the pipe union fitting 151 and rotates with respect to it. The nut 153' is preferably made of metal and, in particular, a cold deformable material, such as steel or brass, for instance.

The valve produced according to the present invention could also be produced with only a single pipe union fitting integral with the main body of the valve, while the remaining entry or exit port could be fitted with a threaded hole or with another type of connection (welding for instance).

## Claims

1. Valve for the interception and/or the regulation of a fluid, and/or for the isolation of a fluid circuit, of the type comprising a main body, at least one externally operable control member, at least one entry port and at least one exit port, characterised in that at least one of said ports comprises a pipe union fitting integral with said main body and provided on its free end with a radially projecting perimeter flange, and that it comprises a threaded nut associated to said pipe union fitting and retained on it in an inseparable way by means of cold deformation of at least a portion of said threaded nut.

2. A valve according to Claim 1, characterised in that both said entry and exit ports are equipped with said pipe union fittings integral with said body, as well as with said threaded nuts associated to each of said pipe unions and retained by cold deformation of a respective portion of said nuts.

3. A valve according to Claim 1 or 2, characterised in that the cold deformed portion of said nut forms a bearing portion against the flange at the end of said pipe union.

4. A valve according to any of the preceding Claims, characterised in that said nut is mounted on said pipe union in a mobile way along a direction parallel to the axis of said pipe union and rotatable with respect to it.

5. A valve according to any of the preceding Claims, characterised in that at least said nut is made of metal or other deformable material.

6. Method for producing a valve for the interception and/or the regulation of a fluid, and/or for the isolation of a fluid circuit, characterised by producing at least one pipe union fitting integral with the body of the valve and the mounting on said pipe union of at least one threaded nut in an inseparable way by means of cold deformation of a portion of said nut.
